# EUROPEAN PATENT SPECIFICATION

(11) **EP 2 452 724 B1**
(45) Date of publication and mention of the grant of the patent: **21.08.2013**
(21) Application number: 11187611.6
(22) Date of filing: 03.11.2011
(51) Int. Cl.: A63B 33/00, A61F 9/02

(54) **Swimming goggles**
Schwimmbrille
lunnettes de natation

(30) Priority: 11.11.2010 IT GE20100122
(43) Date of publication of application: 16.05.2012
(73) Proprietor: Mares S.p.A., 16035 Rapallo GE (IT)
(72) Inventor: Barone, Aristide, 16035 Rapallo (GE) (IT)
(74) Representative: Porsia, Attilio

(56) References cited:
- EP-A1- 0 525 238
- EP-A1- 0 862 932
- US-A1- 2004 088 779

## Description

The present invention relates to swimming goggles, and more particularly to swimming goggles with optical lenses.

As is known, swimming goggles generally comprise a frame in which a pair of lenses is mounted. This frame comprises a rigid part, made from plastic for example, for holding the lenses, and a soft part, such as a part made from rubber or the like, adapted to contact the swimmer's face to ensure good adhesion of the goggles with a watertight seal. The goggles are also provided with a strap connected to the ends of the frame by buckles, which the swimmer can use to tighten the goggles appropriately around his head. The lenses are generally mounted in the goggles by being inserted into conical or tapering seats provided in the frame.

Document EP 0525238, which is considered as closest prior art, describes a lens exchangeable goggle which comprises a mask frame having a pair of openings in right and left positions of the mask frame and a pair of lens units inserted in said openings, in which each of said lens units is composed of a spectacle lens, a tubular portion formed around the spectacle lens and a collar portion projecting outwardly from backside of the tubular portion; each of said openings in said mask frame is formed with a wider width in right and left than the width of backside of the tubular portion of the lens unit; and upper and lower external edges of the tubular portion of each of the lens units are interlocked with internal edge of each of the openings by means of a holding mechanism.

One of the major problems encountered in known swimming goggles is that the lenses may accidentally and undesirably drop out of the seats formed in the frame, possibly as a result of the tension applied to the strap to tighten the goggles around the head, while the frame, although including a rigid part, tends to bend and thus cause undesirable bending of the lenses mounted in it. If the lenses drop out, this is clearly undesirable for the swimmer and may also cause damage to the lenses, which may be costly, especially if they are optical lenses.

The object of the present invention is therefore to provide swimming goggles in which the lenses are mounted in the frame in a stable and removable manner, and thus in such a way that they cannot accidentally drop out of the frame, but can be removed from the frame if, for example, they are to be replaced with lenses having different prescriptions, in the case of optical lenses. Additionally, and advantageously, in the present swimming goggles the rigid part of the frame in which the lenses are mounted is not directly subject to bending.

This object is achieved by the present invention by means of swimming goggles comprising a frame in which seats are provided for mounting a pair of lenses, in which each of the lenses comprises at least a pair of radially projecting tabs adapted to engage in corresponding elements for positioning and removable fastening, provided in practically diametrically opposed positions in each of these seats in the frame, characterized in that a first tab of each of the lenses is positioned in a recess formed in the corresponding mounting seat, and a second tab of each of the lenses is adapted to engage with a catch having a part projecting towards the inside of the seat.

According to another aspect of the present invention, each of these mounting seats for the lenses comprises a rib to withstand any bending of the frame.

Other features and advantages of the present invention will be made clear in the course of the following description, to be considered as a non-limiting example, which refers to the attached drawings, in which:
- Fig. 1 shows a front view of a pair of swimming goggles according to the present invention;
- Fig. 2 shows a view from above of the swimming goggles of Fig. 1;
- Figs. 3a, 3b and 3c show three views from above and in cross section of one of the seats of the frame for mounting a lens, in three successive steps of the insertion of the lens into the seat; and
- Figs. 4a and 4b show a partial view from above of the frame, in a normal position and in a slightly bent position respectively.

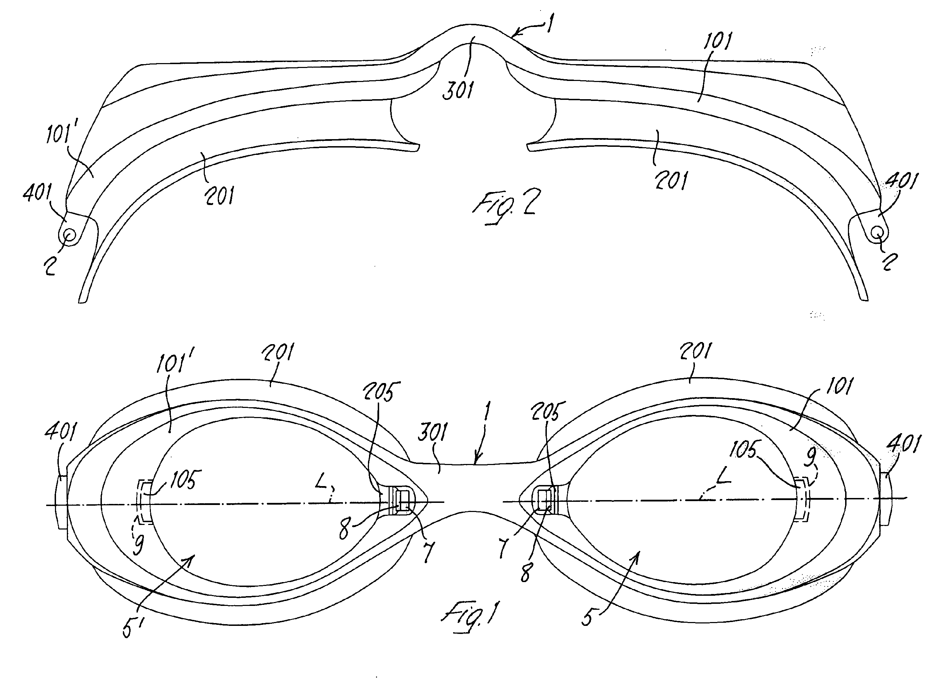

With reference to the attached drawings and with particular reference to Figures 1 and 2, the number 1 indicates the frame of a pair of swimming goggles according to the present invention. This frame 1 comprises a rigid part, made from plastic for example, provided with two mounting seats 101 and 101' for a pair of lenses 5 and 5', and a soft part, made from rubber for example, provided with two lateral parts 201 which are positioned with a degree of adhesion around the swimmer's eyes, and a central part 301 which is located above the swimmer's nose and which links the two lens seats 101 and 101'. Each of these seats 101 and 101' comprises a protuberance 401 at its outer end, this protuberance having a through hole 2 for receiving a pin for connection to a fastening buckle for a strap used when the goggles are put on.

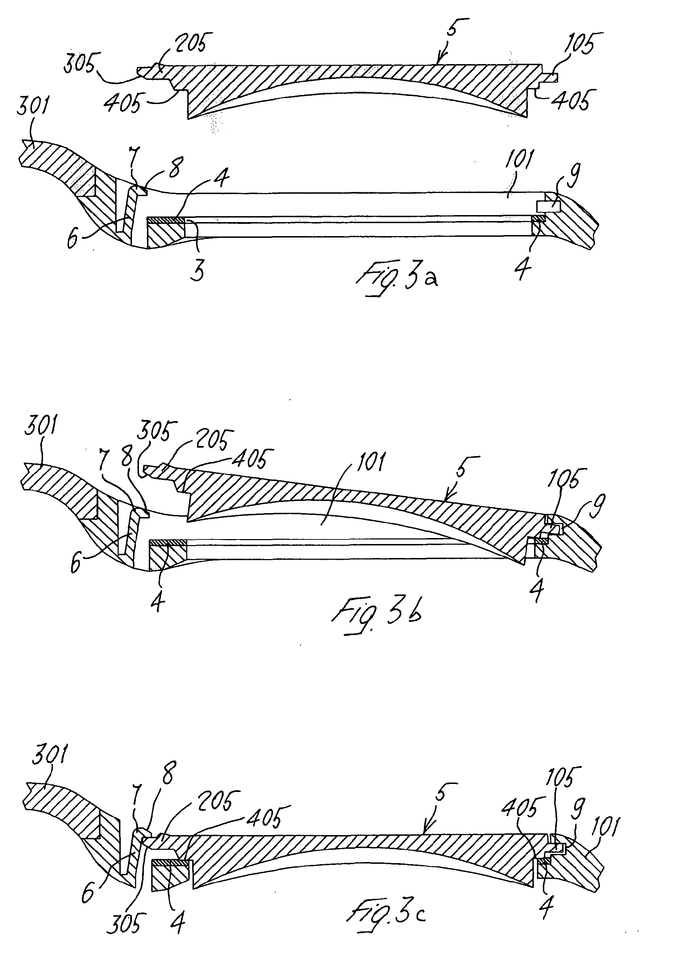

Each of the lens mounting seats of the present goggles (see, for example, the seat 101 of Figures 3a, 3b and 3c in which the lens 5 is mounted) comprises a central through hole 3 around which an annular flat surface 4 is formed to support the lens 5. On one side of this seat there is a catch 6 having a head 7 projecting into the seat 101 and having an inclined plane 8. In a position diametrically opposite the side where this catch 6 is located, a recess 9 is formed for receiving a first tab 105 projecting radially from the lens. In a position diametrically opposite the first tab 105, the lens 5 comprises a second tab 205, projecting radially and shaped in such a way that it has an inclined plane 305. This plane 305 has substantially the same inclination as the inclined plane 8 of the catch 6 and can slide over the latter when the lens 5 is positioned in its seat 101. This lens 5 also comprises an annular edge 405 which can bear on the annular flat surface 4 of the corresponding seat 101. Preferably, the tabs 105 and 205 are formed on each lens 5 and 5' in diametrically opposite positions about the median longitudinal axis L of the lens (see Fig. 1).

The lenses are positioned in their seats in the following manner, this description referring, for the sake of simplicity, to the lens 5 which is mounted in the seat 101 shown in Figures 3a, 3b and 3c: the lens 5 is inclined in such a way that the tab 105 can be inserted into the recess 9 of the seat 101; at this point, the lens 5 is lowered in such a way that the inclined plane 305 of the tab 205 slides over the inclined plane 8 of the head 7 of the catch 6, which is slightly inclined in a resilient way towards the centre of the frame, in other words towards the part 301, in such a way that the tab 205 becomes positioned under the head 7 of the catch 6, as shown in Fig. 3c; and at the end of the movement of the tab 205, the catch 6 returns to the position shown in the drawings, and the lens 5 is then positioned correctly in the seat 101, with the first tab 105 inserted into the recess 9 and with the second tab 205 in a position below the head 7 of the catch 6.

In this way, the stable mounting of the lens 5 in the corresponding seat 101 is achieved, in that it is impossible for the lens 5 accidentally and undesirably to drop out of the seat 101. If the lens is to be replaced, it is simply necessary to bend the catch 6 again by means of the head 7 towards the centre of the frame, thus releasing the second tab 205 and allowing the lens 5 to be removed from the seat 101, by a procedure which is the reverse of that described above for mounting the lens.

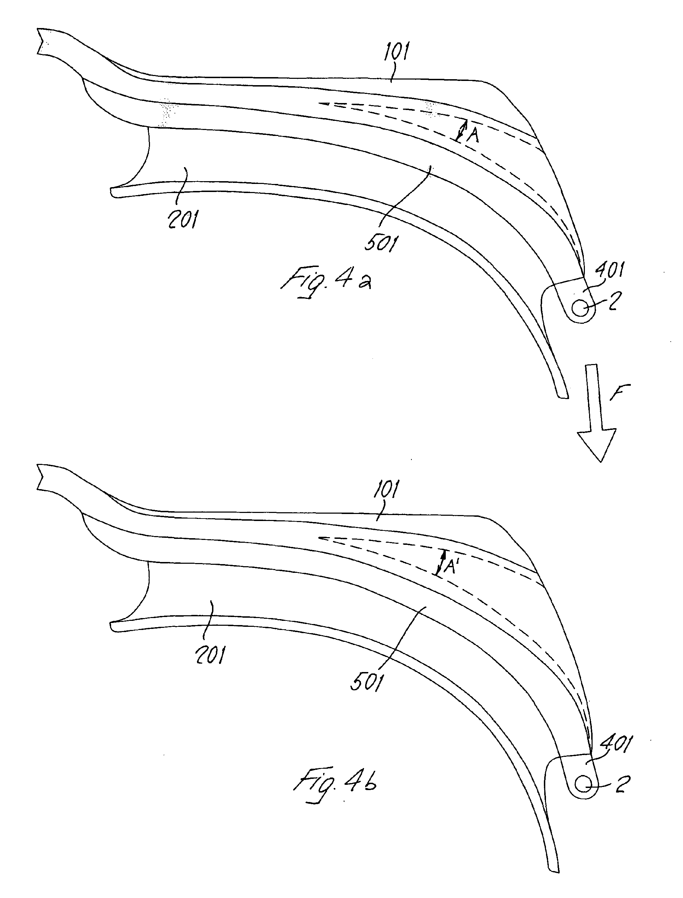

Each of the two seats of the frame in which a lens is mounted, for example the seat 101 shown in Figures 4a and 4b, comprises a rib 501 in a lower position, this rib being made in one piece with the seat 101 and being shaped in such a way that its distance from the seat 101 increases from the centre towards the outside of the frame. Essentially, therefore, an angle A is formed between this rib 501 and the corresponding seat 101. At the end of the rib 501 there is positioned the protuberance 401 having the through hole 2 for receiving a pin for connection to a fastening buckle of a strap used when the goggles are worn. The rib 501 has the function of absorbing any bending of the frame of the goggles caused, for example, by the tension applied by the swimmer to the strap when the goggles are put on. This bending force is exerted in the direction of the arrow F and causes the bending of the rib 501 only, which bends in a resilient way such that the configuration shown in Fig. 4a changes to that of Fig. 4b, in which the angle A' between the rib and the seat 101 is greater than the angle A in Fig. 4a. In other words, if the frame is bent, the rib 501 withstands this bending, whereas the seat 101 remains rigid and thus, advantageously, the lens mounted in this seat is not subjected to any stress. When the bending force is removed, the rib 501 returns resiliently to the position of Fig. 4a.

## Claims

1. Swimming goggles, comprising a frame (1) in which seats (101, 101') are provided for the mounting of a pair of lenses (5, 5'), each of the lenses (5, 5') comprising at least a pair of radially projecting tabs (105, 205) adapted to engage in corresponding elements (6, 9) for positioning and removable fastening, said elements (6, 9) being provided in diametrically opposite positions in each of the seats (101, 101') of the frame (1), **characterized in that** a first tab (105) of each of the lenses (5) is positioned in a recess (9) formed in the corresponding mounting seat (101), and a second tab (205) of each of the lenses (5) is adapted to engage with a catch (6) having a part (7) projecting towards the inside of the seat (101).

2. Swimming goggles according to Claim 1, **characterized in that** the tabs (105, 205) are formed on each lens (5, 5') in diametrically opposite positions about the median longitudinal axis (L) of the lens (5, 5').

3. Swimming goggles according to Claim 1, **characterized in that** the second tab (205) comprises at its end an inclined plane (305) adapted to slide, when the lens (5) is inserted into the corresponding seat (101), over an inclined plane (8) formed on the projecting part (7) of the catch (6), the projecting part (7) being adapted to be positioned on top of the second tab (205) when the mounting of the lens (5) in the corresponding seat (101) is complete.

4. Swimming goggles according to Claim 1, **characterized in that** each of the seats (101) comprises an annular flat surface (4) for supporting the lens (5).

5. Swimming goggles according to Claim 1, **characterized in that** each of the mounting seats (101, 101') of the lenses (5, 5') comprises a rib (501) adapted to withstand any bending of the frame (1).

6. Swimming goggles according to Claim 6, **characterized in that** the rib (501) is made in one piece with the seat (101) and its distance from the seat increases from the centre towards the periphery of the frame (1).

## Patentansprüche

1. Eine Schwimmbrille, die ein Gestell (1) umfasst, in dem entsprechende Sitze (101, 101') zur Einsetzung eines Gläserpaars (5, 5') vorgesehen sind, wobei jedes der Brillengläser (5, 5') mindestens ein Paar radial vorspringender Laschen (105, 205) umfasst, die geeignet sind, in entsprechende Elemente (6, 9) zur jeweiligen Einstellung und entfernbaren Befestigung einzurasten, wobei die genannten Elemente (6, 9) in diametral gegenüberliegenden Stellungen an jedem der Sitze (101, 101`) des Gestells (1) vorgesehen sind, **dadurch gekennzeichnet, dass** eine erste Lasche (105) jedes dieser Brillengläser (5) in einer entsprechenden Aussparung (9) angeordnet ist, welche sich in dem entsprechenden Sitz (101) zur Einsetzung der Brillengläser befindet, und eine zweite Lasche (205) jedes dieser Brillengläser (5) geeignet ist, jeweils mit einer Arretierung (6) einzurasten, welche einen entsprechenden Abschnitt (7) aufweist, der in Richtung des Inneren des jeweiligen Sitzes (101) vorsteht.

2. Eine Schwimmbrille gemäß Anspruch 1, **dadurch gekennzeichnet, dass** die Laschen (105, 205) auf jedem Brillenglas (5, 5`) in diametral gegenüberliegenden Stellungen um die mittlere Längsachse (L) des Brillenglases (5, 5') gebildet werden.

3. Eine Schwimmbrille gemäß Anspruch 1, **dadurch gekennzeichnet, dass** die zweite Lasche (205) an ihrem Ende jeweils eine geneigte Fläche (305) aufweist, die geeignet ist, wenn das Brillenglas (65) in den entsprechenden Sitz eingesetzt ist, über eine geneigte Fläche (8) zu gleiten, die sich auf dem vorstehenden Abschnitt (7) der Arretierung (6) befindet, wobei der vorstehende Abschnitt (7) geeignet ist, an der Spitze der zweiten Lasche (205) angeordnet zu werden, wenn die Einsetzung des Brillenglases (5) in den entsprechenden Sitz (101) beendet ist.

4. Eine Schwimmbrille gemäß Anspruch 1, **dadurch gekennzeichnet, dass** jeder der Sitze (101) jeweils eine ringförmige flache Oberfläche (4) zur Halterung des Brillenglases (5) umfasst.

5. Eine Schwimmbrille gemäß Anspruch 1, **dadurch gekennzeichnet, dass** jeder der Sitze (101, 101`) zur Einsetzung der Brillengläser (5, 5') eine Leiste (501) umfasst, die geeignet ist, einer Verbiegung des Gestells (1) zu widerstehen.

6. Eine Schwimmbrille gemäß Anspruch 6, **dadurch gekennzeichnet, dass** die Leiste (501) einteilig mit dem Sitz (101) ist und ihr Abstand vom Sitz sich jeweils von der Mitte in Richtung des Randes des Gestells (1) vergrößert.

## Revendications

1. Lunettes de natation, comprenant une structure (1) dans laquelle des logements (101, 101') sont prévus pour l'assemblage d'une paire de lentilles (5, 5'), chacune des lentilles (5, 5') comprenant au minimum une paire de languettes sortant radialement en saillie (105, 205) prévues pour s'insérer dans des éléments correspondants (6, 9) pour le placement et la fixation amovible, lesdits éléments (6, 9) étant pourvus dans des positions diamétralement opposées dans chacun des logements (101, 101') de la structure (1), **caractérisées en ce qu'**une première languette (105) de chacune des lentilles (5) est placée dans une cavité (9), réalisée dans le logement d'assemblage correspondant (101), et qu'une deuxième languette (205) de chacune des lentilles (5) est adaptée pour s'insérer dans un cran (6) présentant une partie (7) sortant en saillie en direction de l'intérieur du logement (101).

2. Lunettes de natation selon la revendication 1, **caractérisées en ce que** les languettes (105, 205) sont réalisées sur chaque lentille (5, 5') dans des positions diamétralement opposées autour de l'axe médian longitudinal (L) de la lentille (5, 5').

3. Lunettes de natation selon la revendication 1, **caractérisées en ce que** la deuxième languette (205) comprend, au niveau de sa partie d'extrémité, un plan incliné (305) prévu pour coulisser, quand la lentille (5) est introduite à l'intérieur du logement correspondant (101), au-dessus d'un plan incliné (8) réalisé sur la partie sortant en saillie (7) du cran (6), la partie sortant en saillie (7) étant adaptée pour être placée au-dessus de la deuxième languette (205), quand l' assemblage de la lentille (5) dans le logement correspondant (101) est complété.

4. Lunettes de natation selon la revendication 1, **caractérisées en ce que** chacun des logements (101) comprend une surface plane annulaire (4) pour soutenir la lentille (5).

5. Lunettes de natation selon la revendication 1, **caractérisées en ce que** chacun des logements d'assemblage (101, 101') des lentilles (5, 5') comprend une nervure (501) adaptée pour résister à toute flexion de la structure (1).

6. Lunettes de natation selon la revendication 6, **caractérisées en ce que** la nervure (501) est réalisée en une seule pièce avec le logement (101) et que la distance entre la nervure et le logement s'accroit de l'intérieur vers l'extérieur de la structure (1).
